# EUROPEAN PATENT APPLICATION

(11) **EP 4 741 483 A1**
(43) Date of publication of application: **13.05.2026**
(21) Application number: 25215100.6
(22) Date of filing: 11.11.2025
(51) Int. Cl.: C12H 1/16, B01J 19/10

(54) **METHOD OF TREATING LEES, LEESY OR CLOUDY LIQUIDS FROM WINEMAKING PROCESSES FOR THE EXTRACTION OF WINE AND AROMAS, AND PLANT FOR THE IMPLEMENTATION OF THIS METHOD**

(30) Priority: 12.11.2024 IT 202400025407
(71) Applicant: Ecotecne S.r.l., 31030 Altivole TV (IT)
(72) Inventor: MARTINI, Bruno, 31100 Treviso TV (IT)
(74) Representative: De Sandre, Emanuele

(57) **Abstract**

The present invention relates to a method for treating lees, leesy or cloudy liquids from wine-making processes for the extraction of wine and aromas, characterised in that it comprises a transit phase of a leesy fluid mass (M), comprising lees or lees-like liquids or cloudy liquids, inside at least one ultrasonic conduit (21), with said ultrasonic conduit (21), said ultrasonic conduit (21) being connected to ultrasonic generating means (20) so as to transmit the ultrasonic waves generated by said ultrasonic generating means to said fluidous lees mass (M), said ultrasonic generating means (20) being arranged outside said at least one ultrasonic conduit (21).

## Description

### Technical field

The present invention relates to a method for treating lees and turbid liquids from wine-making processes for the extraction of wine and aromas, and to a plant for implementing this method.

### Background

According to EEC Regulation No. 337/7, lees are defined as 'the residue that forms after fermentation at the bottom of containers containing wine during storage or after authorised treatments, such as the residue resulting from the filtration or centrifugation of this product'.

Although the composition of lees varies, they consist mainly of microorganisms, especially yeasts, and, to a lesser extent, tartaric salts and organic residues.

Wine lees are insoluble residues (fragments of skin, seeds, yeasts, colouring substances, ferments, impurities, microorganisms) that remain suspended and then settle at the bottom of barrels or other containers after alcoholic fermentation.

There are two main types of lees:
- coarse lees are deposits resulting from alcoholic fermentation and contain many impurities (plant residues, microorganisms, tartaric salts); coarse lees, or cloudy wines, contain between 10 and 15 grams of lees per litre;
- fine lees are residues that settle after the first racking of the wine (red wines) and clarification lees for white wines; fine lees contain approximately 1 to 3 grams of lees per litre.

Coarse lees, or total lees, are those that settle with, and immediately after, alcoholic fermentation, characterised by the presence of a considerable amount of impurities (fragments of skin, tartaric salts, plant residues and various microorganisms), while fine lees are those that, as mentioned, settle after the first racking (and therefore after the separation of coarse lees) and are composed almost exclusively of yeasts at the end of their life cycle.

In recent years, lees have been increasingly used to promote the wine maturation process.

The refinement of wine on lees is a technique that, if not performed correctly, can give the wine an unpleasant taste and promote the development of microorganisms.

Nowadays, there is a growing need in the wine industry for a method to take advantage of the less valued by-products of winemaking, such as lees, in order to extract substances from these by-products that can be reintroduced into the winemaking process with a view to significantly improving the final product.

### Summary of the invention

The technical problem posed and solved by the present invention is therefore to develop a method for treating lees and leesy or turbid liquids from winemaking processes for the extraction of wine and aromas, as well as a plant for implementing this method.

In particular, an important purpose of the invention is to develop a method for treating lees and leesy or turbid liquids that can improve the economic and environmental sustainability of the wine production chain through the recovery of the main by-products of winemaking, in favour of the recovery and extraction for subsequent use of substances that can be used in other subsequent independent winemaking processes.

Another purpose of the present invention is to develop an energy-sustainable treatment method that can be implemented with a plant with low energy consumption.

Another important purpose of the invention is to develop a rapid method and thus to develop a highly efficient production plant.

This task and these objectives are achieved by a method for treating lees and leesy or turbid liquids from wine-making processes for the extraction of wine and aromas, according to claim 1, as well as by a plant for implementing this method according to claim 7.

Preferred features of the present invention are the subject of the respective dependent claims.

Further features and advantages of the invention will be apparent from the description of a preferred, but not exclusive, embodiment of the electric motor structure according to the invention, supported by the drawings provided for illustrative and non-limitative purposes in the attached tables and listed below.

### Brief description of the figures

Reference will be made to the figures in the attached drawings, in which:
- Figure 1 shows a schematic view of a system according to the present invention for implementing a method of treating lees, also according to the invention;
- Figure 2 shows a side sectional view of a detail of the plant according to the invention;
- Figure 3 shows a perspective view of the detail in Figure 2;
- Figure 4 shows a perspective view of a variant of the detail in Figure 2;
- Figure 5 shows a front view of another detail of the plant according to the invention.

The thicknesses and curvatures shown in the above figures are purely illustrative, are generally magnified and are not necessarily shown to scale.

### Detailed description of preferred embodiments

Various embodiments and variants of the invention will be described below with reference to the figures above.

Similar components are denoted in the various figures with the same reference number.

In the detailed description below, embodiments and variants additional to those already discussed in the description will be illustrated only insofar as they differ from what has already been described.

Furthermore, the various embodiments and variants described below may be used in combination, where compatible.

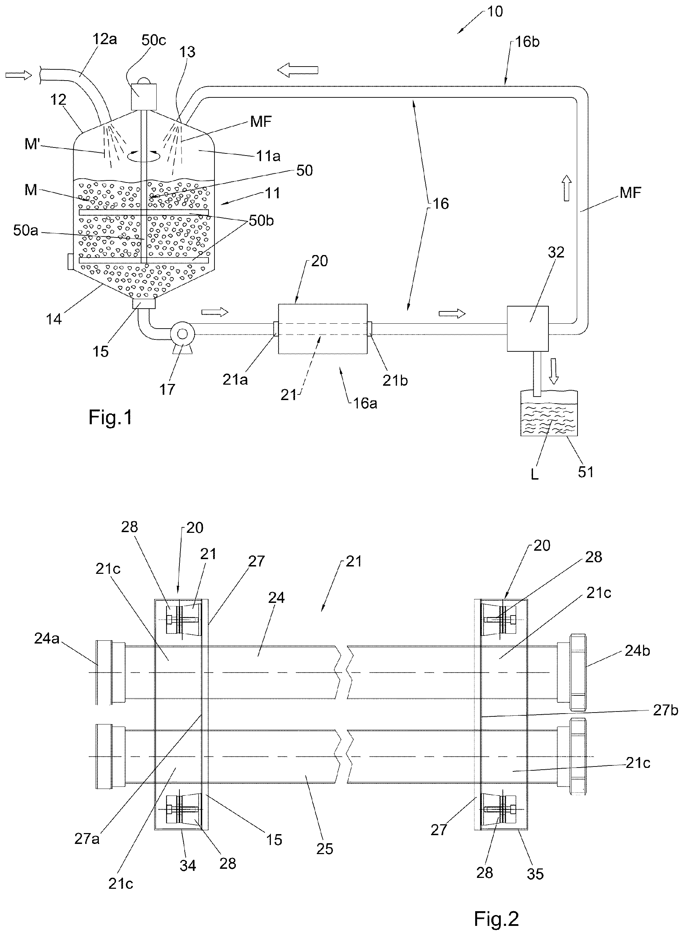

With initial reference to Figure 1, according to one embodiment of the invention, a method for treating lees, lees-containing liquids or turbid liquids from wine-making processes for the extraction of wine or aromas comprises a transit phase of a leesy fluid mass M, comprising lees or lees-like liquids or turbid liquids, inside at least one ultrasonic duct 21, with said ultrasonic duct 21 being traversed.

The ultrasonic duct 21 is connected to ultrasonic generating means 20 so as to transmit the ultrasonic waves generated by the ultrasonic generating means 20 to the leesy fluid mass M.

The leesy fluid mass M is understood to comprise either coarse lees only, fine lees only, a mixture of coarse lees and fine lees, or other lees known today.

The leesy fluid mass M is therefore a fluid originating from a process subsequent, or a phase subsequent to, a crushing process, and not from a crushing process. It is clear that the present method is not a method for treating crushed grapes to produce wine.

The ultrasonic generating means 20 are arranged outside said at least one ultrasonic duct 21.

The method according to the present invention involves the use of a single ultrasonic duct 21, or several ultrasonic conduits arranged in series; in an alternative embodiment of the invention, there are several ultrasonic conduits arranged in parallel, so that these ultrasonic conduits are traversed in parallel in the same direction of traversal.

The method according to the present invention comprises the following operational steps:
a) loading a tank 11 with a leesy fluid mass M comprising lees, or lees-containing liquids, or turbid liquids from winemaking processes,
b) withdrawing said leesy fluid mass M from a collection bottom 14 of the tank 11 and pumping the leesy fluid mass M into the ultrasonic duct 21 so that the leesy fluid mass M continuously traverses said ultrasonic duct 21 from the inlet 21a of said ultrasonic duct 21 to the outletof said ultrasonic duct 21,
c) subjecting the leesy fluid mass M to ultrasound generated by ultrasound generators 20 operating at frequencies between 18 kHz and 30 kHz, with powers between 5 Watt/litre and 2000 Watt/litre;
d) filtering the leesy fluid mass M, exiting from said ultrasonic duct 21, separating a clear liquid L from a filtered leesy fluid mass MF,
e) returning the filtered leesy fluid mass MF to the upper part 11a of said tank 11,
f) repeating steps b) to e), defining an extraction cycle, until all the leesy fluid mass M, together with the filtered leesy fluid mass MF, has been subjected to ultrasound inside said ultrasonic duct 21 for a total period of between 30 seconds and 30 minutes, and preferably between 1 minute and 15 minutes.

Steps b) to e) are therefore to be understood as repeatable a number of times such as to subject the fluid mass of lees M to the action of ultrasound inside the ultrasonic duct 21 for a total time of between 30 seconds and 30 minutes, and preferably between 1 minute and 15 minutes.

Since the clear liquid L, or clarified liquid, i.e. the so-called 'clear', is continuously separated and extracted from the flow of leesy fluid mass M in step d) of filtration of the leesy fluid mass M, the method according to the present invention provides for a step of replenishing the leesy fluid mass M in the tank 11.

This refilling phase involves periodically introducing a new quantity of leesy fluid mass M', which is added to the leesy fluid mass M mixed with the filtered fluid mass MF, which is reintroduced into the same tank 11.

At the end of the treatment, the leesy fluid mass M is recirculated until substantially all the liquid part is extracted in the filtration phase d) and a dense residue remains at the bottom of the tank 11, from which it is removed at the end of the application of the method according to the invention.

The ultrasonic generator means 20 and the ultrasonic conduit 21 are configured and connected in such a way that the temperature of the leesy fluid mass M at the inlet 21a of said ultrasonic conduit 21 is substantially equal to the temperature of said leesy fluid mass M at the outlet 21b of said ultrasonic duct 21.

Alternatively, the ultrasonic generating means 20 and the ultrasonic duct 21 are configured and connected such that a temperature difference of the leesy fluid mass M between the outlet 21b of said ultrasonic duct 21 and the inlet 21a of said ultrasonic duct 21 is between 1°C and 45°C.

The transit phase of the leesy fluid mass M inside the ultrasonic duct 21, with passage through the ultrasonic duct, is therefore such that the temperature of the leesy fluid mass M at the inlet 21a of said ultrasonic duct 21 is substantially equal to the temperature of said leesy fluid mass M at the outlet 21b of said ultrasonic duct 21, or increases, at the outlet 21b, by a temperature Delta of between 1°C and 45°C.

For example, and in particular, the ultrasonic generating means 20 and the ultrasonic duct 21 are configured and connected such that the difference temperature of the fluid mass M between the outlet 21b of said ultrasonic duct 21 and the inlet 21a of said ultrasonic duct 21 is approximately 0.3°C for a single passage through the ultrasonic duct 21.

In summary, and preferably, the temperature difference of the fluid mass M between the beginning and end of a treatment received with the method according to the invention is less than or equal to 1°C.

Thanks to this feature, none of the substances present in the leesy fluid mass M are altered by a change in temperature, since there is no substantial change in temperature in the leesy fluid mass M passing through the ultrasonic duct 21.

The ultrasonic generating means 20 comprise a plurality of piezoelectric or magnetostrictive ultrasonic transducers.

The application of ultrasound to the leesy fluid mass M mainly determines the extraction of wine from coarse lees and the extraction of aromas from fine lees.

The clarified liquid L emerging from the filtration stage is collected and made available for subsequent activities within wine production processes.

The invention also includes a plant 10 for the treatment of lees, lees-containing liquids or cloudy liquids from wine-making processes, for the extraction of wine or aromas from such lees, lees-containing liquids or cloudy liquids.

This plant 10 comprises:
- a tank 11 for containing a leesy fluid mass M, said tank 11 in turn comprising:
   - a lid 12, having a loading mouth 13,
   - a collection bottom 14, having a discharge opening 15;
- a recirculation line 16 for the transit of said leesy fluid mass M; said recirculation line 16 extends between the discharge outlet 15 and said inlet 13; the recirculation line 16 comprises:
   - at least one ultrasonic conduit 21 having an inlet 21a and an outlet 21b, configured and positioned so as to be traversed internally by said fluid mass of sediment M,
   - ultrasonic generating means 20 connected to said at least one ultrasonic duct 21, said ultrasonic generating means 20 being configured so as to transmit ultrasonic waves to said leesy fluid mass M passing through said at least one ultrasonic duct 21;
   - filtration means 32 configured to be traversed by the leesy fluid mass of sediment M and to extract a clear, or clarified, liquid L from said fluid mass of sediment M,
   - pumping means 17 configured to draw the leesy fluid mass M from said discharge outlet 15, to cause said leesy fluid mass M to pass through the at least one ultrasonic duct 21, to cause the leesy fluid mass M to pass through the filtration means 32, and to move said leesy fluid mass M, exiting the filtration means 32, towards said loading mouth 13.

The filtration means 32 comprise a tangential filter, preferably a tangential membrane filter.

In particular, said filtration means 32 comprise, or consist of, a porous ceramic filter with an osmotic effect.

These filtration means 32 are configured in such a way that, due to the pressure difference, the clear or clarified liquid L passes through ceramic filters and is transferred to a collection container 51, while the cells of the leesy fluid mass M that cannot pass through the pores of the filters of the filtration means 32 remain in the recirculation line 16 and return to the tank 11.

The pumping means 17 comprise, for example and not exclusively, a single-screw pump, or alternatively a piston pump, or alternatively a peristaltic pump, or alternatively a lobe pump.

The leesy fluid mass M is kept in continuous recirculation.

When this leesy fluid mass M thickens, due to the continuous tapping of clear or clarified liquid L through the filtration means 32, the method is interrupted and the lees residues are removed from the bottom 14 of the tank 11.

When the performance of the filtration means 32 falls below a predetermined limit, the method and the plant 10 are stopped for maintenance of the filtration means 32.

In summary, and in other words, the lees are recirculated between tank 11, ultrasonic duct 21 and filtration means 32 until, at a certain point, the filtration means 32 no longer filter.

An example of the operation of the method and system 10 according to the invention is as follows.

Tank 11 is filled with 500 litres of leesy fluid mass M.

This leesy fluid mass M passes through the ultrasonic duct 21 where it receives ultrasonic treatment, and then passes through the filtration means 32 which extract a clarified liquid L, 'good' and rich in mannoproteins, and leaves the rest of the leesy fluid mass MF inside the recirculation line 16, where MF refers to the part of the leesy fluid mass M downstream of the ultrasonic duct 21, i.e. the 'bad' part of the lees.

If, for example, 100 litres of clarified liquid L are separated from tank 11, another 100 litres of leesy fluid mass M' are added to tank 11; tank 11 therefore contains 100 litres of new lees plus 400 litres of lees that already have a certain degree of concentration.

Plant 10 therefore also includes a refill pipe 12a, shown in Fig. 1, configured and positioned to introduce new leesy fluid mass M' into tank 11.

As the circuit continues to tap, the dirt in the tank increases.

At a certain point, it is no longer worthwhile to circulate the same leesy fluid mass M and MF because this would lead to clogging of the filtration means 32, so the dirt is removed and the system is restored with new leesy fluid mass.

The system 10 includes a mixing unit 50 inside the tank 11, configured to mix the leesy fluid mass M, M' and MF inside the tank 11.

This mixing unit 50 comprises, for example, a rotating shaft 50a, having one or two blades 50b, and a motor 50c for rotating the rotating shaft 50a.

The recirculation line 16 essentially comprises two branches:
- a first branch 16a defined between the discharge outlet 15 and the filtration means 32,
- a second branch 16b defined between the filtration means 32 and the inlet 13. In this example, the vibration generating means 20, with the ultrasonic duct 21, are positioned in the first branch 16a.

The pumping means 17 are arranged upstream of the ultrasonic conduit 21.

In the implementation of the system 10 according to the present invention, the at least one ultrasonic duct 21 comprises a single conduit.

In particular, this ultrasonic duct 21 comprises a single conduit which in turn comprises a plurality of tubular sections placed side by side and connected in series.

More specifically, and by way of example, this ultrasonic duct 21 comprises a single conduit which in turn comprises a plurality of tubular sections 22, 23, 24 and 25 placed side by side so as to be arranged with their respective longitudinal axes parallel to each other, and connected in series by means of curved sleeves 26.

The ultrasound generating means 20 are connected to said at least one ultrasound duct 21 so as to allow the transmission to said fluid mass M of vibrations such as to cause the generation of ultrasonic cavitation in said leesy fluid mass M.

In particular, in the present embodiment, the ultrasound generating means 20 comprise at least one support and transmission body 27 configured to support a plurality of ultrasonic vibration generators 28 for the vibration of said at least one ultrasonic conduit 21, each fixing portion 21c of said at least one ultrasonic conduit 21, which is fixed to a corresponding support and transmission body 27, being surrounded by at least two ultrasonic vibration generators 28.

These ultrasonic generating means 20 are well described in patent EP3612037B1 in the name of the same owner.

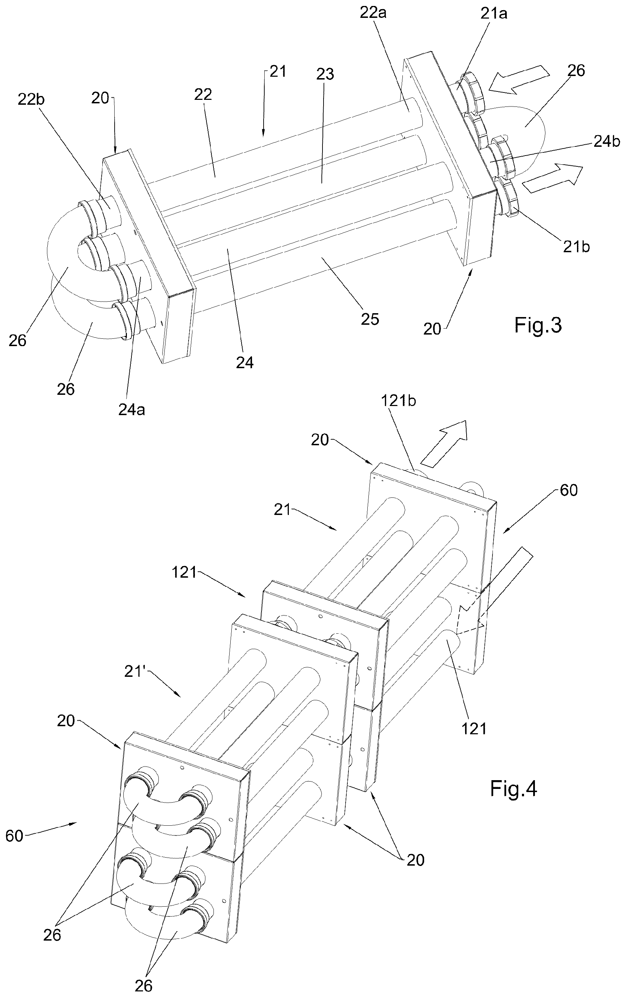

More specifically, as shown in Figures 2 and 3, the ultrasonic conduit 21 comprises at least two tubular sections 24, 25, and preferably four tubular sections 22, 23, 24 and 25, and said ultrasonic generating means 20 comprise two support bodies 27.

The four tubular sections 22, 23, 24 and 25, which are parallel and side by side, are fixed to the two support bodies 27.

Each tubular section 22, 23, 24 and 25 therefore has two fixing portions 21c, these fixing portions 21c being fixed to the support bodies 27.

Each fixing portion 21c is surrounded by at least two vibration generators 28, for example by four ultrasonic vibration generators 28.

For example, four generators 28 surround the fixing portion 21a of a tubular section 24 with a support and transmission body 27.

Each of the support and transmission bodies 27 therefore carries a number of vibration generators such that each fixing portion 21a passing through it is surrounded by four vibration generators as described above.

Each support and transmission body 27 consists of a metal plate with through holes shaped to be traversed by the tubular sections 22, 23, 24 and 25.

The tubular sections 22, 23, 24 and 25 are straight.

Each support and transmission body 27 is crossed by tubular sections 22, 23, 24 and 25 in a direction orthogonal to its position.

The ultrasonic vibration generators transmit vibrations to the support and transmission body 27, i.e. to the plate that carries them, and from the support and transmission body 27 these vibrations are propagated to the tubular sections 22, 23, 24, 25.

The tubular sections 22, 23, 24 and 25 are made of metal tubes.

The ultrasonic vibration generators emit vibrations mainly in a direction orthogonal to the plate that carries them, i.e. in a direction parallel to the axes of the tubular sections 22, 23, 24 and 25.

Thanks to this particular arrangement, the tubular sections 22, 23, 24 and 25 are subjected to
vibrations mainly in the axial direction, i.e. in the direction of their length; in this way, each tubular section 22, 23, 24 and 25 is subjected to a series of micrometric compressions and elongations in the axial direction, determined by the propagation of the vibrations emitted by the vibration generators; these vibrations in the axial direction cause corresponding vibrations in the radial direction, which propagate concentrically on each section of each tubular section, along the entire length of each tubular element.

Each support body 27 is fixed to the tubular sections 22, 23, 24 and 25 by welding. This welding is preferably of the type with material added to both sides of the support and transmission body 27.

The tubular sections 22, 23, 24, 25 each consist of a metal tube having the same internal diameter as the others, so that two tubular sections connected in series do not cause any changes in section.

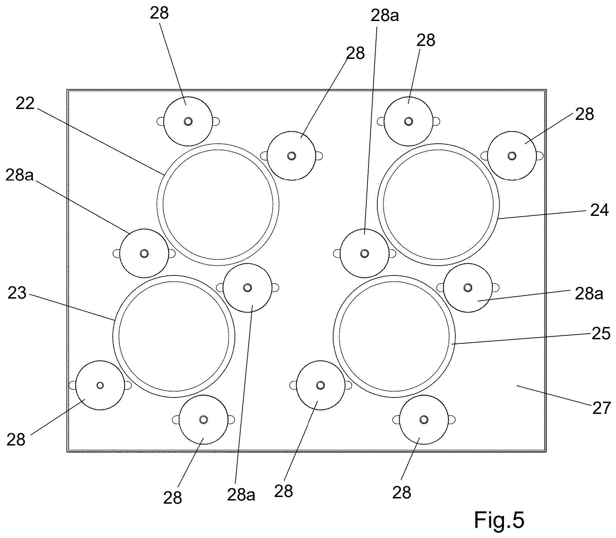

In this example, each support and transmission body 27 carries twelve ultrasonic vibration generators 28, as clearly shown in the front view of Figure 5.

Some of the ultrasonic vibration generators carried by a support body 27 cooperate to surround more than one fixing portion 21c of the tubular sections 22, 23, 24, 25; for example, as shown in Figure 3, the ultrasonic vibration generators 28a located in an intermediate zone between the two sections of tubular element 22 and 23 and 24 and 25 respectively, cooperate to surround both a first fixing portion 21c 24 25 of a tubular section 24 and a second fixing portion 21c of another adjacent tubular section 25.

Thanks to this positioning of the ultrasonic vibration generators on their respective support and transmission bodies, the action of the vibration generators is synergistic and allows savings in the use of two or more additional vibration generators.

The ultrasonic vibration generators carried by the same support body 27 are mounted on the same face of the support body 27 itself.

The ultrasonic vibration generators are fixed to the respective support bodies 27 and are excited in such a way that their action in the axial direction on the tubular sections 22, 23, 24, 25 is added together.

In the embodiment described here, the vibration generators are fixed to the respective support bodies 27 on two opposite faces, 27a and 27b respectively, as shown in Figure 2.

Each ultrasonic vibration generator 28, 28a consists of a sonotrode.

The ultrasonic vibration generators 28, 28a carried by the same support and transmission body 27 are enclosed within protective casings 34 and 35 respectively, to protect them from accidental contact, in particular with washing liquids and treated liquids.

The ends of each tubular section 22, 23, 24, 25 of an ultrasonic duct 21, for example the ends 22a and 22b of a first tubular section 22 and the ends 24a and 24b of a second tubular section 24, can be connected to corresponding ends of the tubular sections of a second equal structure of apparatus 21', as exemplified in Figure 4.

An ultrasonic transmission module 60 is therefore defined, comprising:
- at least two parallel and side-by-side tubular sections 22, 23, for example four tubular sections 22, 23, 24, 25, of an ultrasonic duct 21,
- fixed to two support and transmission bodies 27,
where each fixing portion 21c of each tubular section 22 is surrounded by at least two ultrasonic vibration generators 28, 28a of the ultrasonic vibration generators supported by the support and transmission bodies 27.

The ultrasonic duct 121, as exemplified in Figure 4, is composed of two or more modules 60 and has an inlet 121a and an outlet 121b.

The ultrasonic ducts 21 and 121 are therefore serpentine ducts.

The ultrasonic generating means 20 are configured in such a way that they operate simultaneously on all the tubular sections 22, 23, 24, 25 of which an ultrasonic duct 21, 121 is composed.

In this way, with a single passage through the ultrasonic duct 21, 121, the fluid mass M is subjected to the action of the ultrasonic waves as many times as there are tubular sections 22, 23, 24, 25 comprising the ultrasonic duct 21, 121.

The plant 10 according to the invention is therefore highly synergistic and relatively low in consumption, since the energy of each ultrasonic generator 28, 28a is distributed synergistically over the entire length of each of the side-by-side tubular sections 22, 23, 24, 25.

In particular, a module 60 as described above has a power consumption of approximately 0.09 watts/cm3.

Therefore, the method according to the present invention is also characterised by the fact that the power density of the ultrasound, which is transmitted by the ultrasonic generating means 20 to the fluid mass M passing through the ultrasound duct 21, is approximately 0.09 W/cm3.

By way of example, the method and apparatus according to the invention operate as described below.

In the presence of a 1000-litre tank 11 and an ultrasonic duct 21 having a total internal volume of 100 litres, in order to obtain an average treatment duration of 3 minutes for the entire fluid mass M, the plant 10 and the ultrasonic generating means 20 must operate for 30 minutes, with a flow rate through the ultrasonic conduit of 100 I/min.

Therefore, if I have 1000 litres and the pipe is 100 litres, and the operator wants a 1-minute treatment, it will take a total of 10 minutes to pass 1000 litres through the 100-litre pipe. If I want a 10-minute treatment, I need 100 minutes for 1000 litres.

It is therefore clear how a method and a plant 10 for the treatment of leesy, cloudy or turbid liquids according to the present invention allow the task and purposes set out to be achieved.

In particular, an important purpose of the invention is to develop a method for treating lees and leesy or turbid or cloudy liquids that improves the economic and environmental sustainability of the wine production chain through the recovery of the main by-products of winemaking.

Furthermore, the present invention has developed an energy-sustainable treatment method that can be implemented with a plant with low energy consumption.

In addition, the invention has developed a rapid method and a highly efficient production plant.

Therefore, this invention has developed a method for treating lees, cloudy liquids or turbid liquids from winemaking processes, which method is external and independent of a winemaking process from which the lees and/or cloudy liquids or turbid liquids used in the method according to the invention have been extracted and discarded.

Furthermore, the present invention has developed a method that does not involve grape pomace, but only lees, lees-containing liquids, and cloudy liquids that are waste products from a different and independent wine-making process.

The present invention has been described above with reference to preferred embodiments. It is understood that other embodiments may exist that relate to the same inventive core, as defined by the scope of protection of the claims set out below.

## Claims

1. Method of treating lees, leesy or turbid liquids from winemaking processes for the extraction of wine and aromas, **characterised in that** it comprises a transit phase of a leesy fluid mass (M), comprising lees or leesy liquids or cloudy liquids, inside at least one ultrasonic duct (21), with passage of said ultrasonic duct (21), said ultrasonic duct (21) being connected to ultrasonic generating means (20) in such a way as to transmit the ultrasounds generated by said ultrasonic generating means to said leesy fluid mass (M), said ultrasonic generating means (20) being arranged outside said at least one ultrasonic duct (21).

2. Method according to claim 1, **characterized in that** it comprises the following operating stages:
a) loading into a tank (11) a leesy fluid mass (M) comprising lees, or leesy liquids, or cloudy liquids originating from winemaking processes,
b) withdrawing said leesy fluid mass (M) from a collection bottom (14) of said tank (11) and pumping said leesy fluid mass (M) into said ultrasonic duct (21) so that said leesy fluid mass (M) continuously passes through said ultrasonic duct (21) from the inlet (21a) of said ultrasonic duct (21) to the outlet (21b) of said ultrasonic duct (21),
c) subjecting said leesy fluid mass (M) to ultrasounds determined by ultrasonic generator means (20) operating at frequencies between 18 kHz and 30 kHz, with powers between 5 Watts/litre and 2000 Watts/litre;
d) filtering said leesy fluid mass (M), exiting from said ultrasonic duct (21), separating a clear liquid (L) from a filtered leesy fluid mass (MF),
e) returning said filtered leesy fluid mass (MF), to the upper part (11a) of said tank (11),
f) repeating the phases from b) to e), defining an extraction cycle, until all the fecal fluid mass (M), with the filtered leesy fluid mass (MF), is subjected to ultrasound inside said ultrasonic duct (21) for a total period of time between 30 seconds and 30 minutes.

3. Method according to one or more of the preceding claims, **characterized in that** said ultrasonic generating means (20) and the ultrasonic duct (21) are configured and connected in such a way that the temperature of the leesy fluid mass (M) at the inlet (21a) of said ultrasonic duct (21) is substantially equal to the temperature of said leesy fluid mass (M) at the outlet (21b) of said ultrasonic duct (21), or said ultrasonic generator means (20) and the ultrasonic duct (21) are configured and connected in such a way that a temperature difference of the leesy fluid mass (M) between the outlet (21b) of said ultrasonic duct (21) and the inlet (21a) of said ultrasonic duct (21) is between 1°C and 45°C.

4. Method according to one or more of the preceding claims, **characterized in that** the ultrasonic generating means (20) and the ultrasonic duct (21) are configured and connected in such a way that the temperature difference of the leesy fluid mass (M) between the outlet (21b) of said ultrasonic duct (21) and the inlet (21a) of said ultrasonic duct (21) is approximately 0.3°C for a single passage in the ultrasonic duct (21).

5. Method according to one or more of the preceding claims, **characterized in that** the temperature difference of the leesy fluid mass (M) between the beginning and the end of a treatment received with the said method, is less than or equal to 1°C.

6. Method according to one or more of the preceding claims **characterized in that** said ultrasound generating means (20) comprise a plurality of ultrasonic transducers of the piezoelectric type, or of the magnetostrictive type.

7. Method according to one or more of the preceding claims **characterized in that** it comprises a phase of topping up the leesy fluid mass (M) in the tank (11).

8. Plant (10) for the treatment of lees, leesy or cloudy liquids from winemaking processes for the extraction of wine and aromas, which is **characterised by the fact** that it comprises:
- a tank (11) for containing a leesy fluid mass (M), said tank (11) comprising in turn:
- a lid (12), having a loading mouth (13),
- a collection bottom (14), having a discharge mouth (15);
- a recirculation line (16) for the transit of said leesy fluid mass (M), said recirculation line (16) extending between said discharge mouth (15) and said loading mouth (13), said recirculation line (16) comprising:
- at least one ultrasonic conduit (21) having an inlet mouth (21a) and an outlet mouth (21b), configured and positioned so as to be internally traversed by said fleesy fluid mass (M),
- ultrasonic generating means (20) connected to said at least one ultrasonic conduit (21), said ultrasonic generating means (20) being configured so as to transmit ultrasound to said leesy fluid mass (M) which passes through said at least one ultrasonic conduit (21);
- filtering means (32) configured to be passed through by said leesy fluid mass (M) and to extract a clear liquid (L) from said leesy fluid mass (M),
- pumping means (17) configured to withdraw said leesy fluid mass (M) from said discharge mouth (15), to induce said leesy fluid mass (M) to pass through said at least one ultrasonic conduit (21), to induce said leesy fluid mass (M) to pass through said filtering means (32), and to move said leesy fluid mass (M), exiting from said filtering means (32), towards said loading mouth (13).

9. Plant according to claim 8, **characterized in that** said ultrasonic generating means (20) are connected to said at least one ultrasonic duct (21) so as to allow the transmission to said leesy fluid mass (M) of vibrations such as to determine the generation of ultrasonic cavitation in said leesy fluid mass (M).

10. Plant according to one or more of claims 8 and 9, **characterized in that** said ultrasonic generating means (20) comprise at least one support and transmission body (27) configured to support a plurality of ultrasonic vibration generators (28) for the vibration of said at least one ultrasonic duct (21), each portion (21c) of said at least one ultrasonic duct (21), which is fixed to a corresponding support and transmission body (27), being surrounded by at least two ultrasonic vibration generators (26).

11. Plant according to one or more of claims 8 to 10, **characterised in that** said filtration means (32) comprise a tangential filter, preferably a tangential membrane filter.
